# DEMANDE DE BREVET EUROPEEN

(11) **EP 1 096 819 A1**
(43) Date de publication de la demande: **02.05.2001**
(21) Numéro de dépôt: 00402772.8
(22) Date de dépôt: 09.10.2000
(51) Int. Cl.: H04Q 7/32

(54) **Procédé pour séléctionner un mode avec un terminal radiotéléphonique bimode DECT/GSM**

(30) Priorité: 20.10.1999 FR 9913318
(71) Demandeur: SAGEM SA, 75116 Paris (FR)
(72) Inventeur: Lejay, Laurent, 95600 Eaubonne (FR)
(74) Mandataire: Lapoux, Roland

(57) **Abrégé**

Un terminal radiotéléphonique (DMT) est susceptible de fonctionner selon l'un de premier et deuxième modes de communication (GSM, DECT). Lorsque le terminal est configuré en bimode automatique, l'appel sortant en le premier mode (GSM) est établi en réponse à l'appartenance d'un préfixe du numéro téléphonique relatif à l'appel sortant à une table de préfixes mémorisée dans le terminal ou bien en réponse à l'un des événements suivants après un appui sur une touche de prise de ligne (TP) : l'appartenance ci-dessus, une perte de couverture radioélectrique relative à l'autre mode, une sélection manuelle dudit premier mode. Le terminal utilise la face avant d'un terminal connu GSM même lorsqu'il fonctionne en mode DECT.

## Description

La présente invention concerne un terminal radiotéléphonique mobile de type bimode. Ce terminal est capable de communiquer à travers un réseau de radiotéléphonie de type GSM (Global System for Mobile commmunication) à travers un réseau de radiotéléphonie de type DECT (Digital Enhanced Cordless Télécommunications). L'invention a trait plus particulièrement à l'ergonomie présentée par un tel terminal au niveau de la sélection de l'un des deux modes de communication GSM et DECT soit manuellement, soit automatiquement, lors de l'établissement d'un appel sortant.

Le projet de norme ETSI, EN 301 242 V1.2.1, juillet 1998, spécifie des directives pour des terminaux radiotéléphoniques bimodes. Particulièrement en mode commuté automatique, la norme recommande que le terminal sélectionne automatiquement le mode GSM ou le mode DECT par rapport à un mode préféré défini par l'usager du terminal. Lorsque le terminal se trouve dans des zones de couverture d'un réseau GSM et d'un réseau DECT, le terminal établit des communications dans le mode préféré sélectionné par l'usager, et si la couverture de l'un des réseaux GSM ou DECT est perdue, le terminal établit des communications à travers l'autre réseau.

L'invention vise à fournir un procédé de sélection de mode de communication dans un terminal bimode par l'intermédiaire de moyens accessibles à l'usager du terminal qui sont communs pour l'établissement d'une communication en mode GSM et en mode DECT afin que l'un des deux modes de communication soit plus privilégié par rapport à l'autre mode même en configuration de commutation automatique des modes.

A cette fin, le procédé selon l'invention pour établir un appel sortant dans un terminal radiotéléphonique susceptible de fonctionner selon l'un de premier et deuxième modes de communication, est caractérisé en ce que, lorsque le terminal est configuré en bimode, l'appel sortant en le premier mode est établi en réponse à l'appartenance d'un préfixe du numéro téléphonique relatif à l'appel sortant à une table de préfixes mémorisée dans le terminal, après un appui sur une première touche de prise de ligne du terminal.

La table privilégie de préférence la mémorisation de préfixes de numéros d'appel correspondant à des communications selon le mode de communication le moins coûteux.

Selon une réalisation plus complète, lorsque lorsque le terminal est configuré en bimode, l'appel sortant en le premier mode est établi en réponse à l'un des événements suivants après un appui sur la première touche de prise de ligne du terminal : perte de couverture radioélectrique relative à l'autre mode, sélection manuelle dudit premier mode, appartenance du préfixe du numéro téléphonique relatif à l'appel sortant à la table de préfixes mémorisée dans le terminal.

Lorsque le terminal est configuré en bimode, l'appel sortant est établi en le deuxième mode en réponse à l'un des événements suivants après l'appui sur une deuxième touche de prise de ligne du terminal : perte de couverture radioélectrique relative au premier mode, sélection manuelle dudit deuxième mode, différence entre le préfixe du numéro téléphonique relatif à l'appel sortant et les préfixes contenus dans ladite table.

Les première et deuxième touches de prise de ligne sont de préférence confondues en une unique touche de prise de ligne, ce qui évite toute confusion lors d'un "décrochage".

La sélection de mode peut être effectuée par forçage en appuyant sur une touche prédéterminée pour valider la sélection du mode écrit sur un afficheur du terminal de préférence en regard d'une marque prédéterminée, telle que flèche.

De préférence, les premier et deuxième modes sont les modes de communication GSM et DECT respectivement. Le premier mode est de préférence le mode GSM afin que l'usager oriente les communications particulièrement avec des terminaux mobiles GSM à travers un réseau de radiotéléphonie de type GSM pour diminuer le coût des communications. Toutefois, le premier réseau peut être un réseau DECT lorsque l'usager estime que la qualité des communications est meilleure à travers un réseau DECT qu'à travers un réseau GSM, par exemple lorsque le terminal est en limite de couverture de réseau GSM.

Lorsque l'appel sortant est établi en mode de communication DECT, le procédé comprend de préférence la détermination de la taille du numéro téléphonique, la comparaison de la taille déterminée avec un nombre prédéterminé, et l'établissement de l'appel sortant en un mode d'intercommunication à travers une borne radio lorsque la taille est au plus égale au nombre prédéterminé, ou l'établissement de l'appel sortant en un mode externe vers un réseau téléphonique fixe dans le cas contraire.

Lorsque l'appel est établi en mode de communication DECT, la succession des appuis sur des première et deuxième touches prédéterminées du terminal est équivalente à un appui sur une touche "rappel enregistreur".

Lorsque l'appel est établi en mode de communication DECT, la succession des appuis sur des première et deuxième touches prédéterminées du terminal est équivalente à un appui sur une touche d'intercommunication. De préférence, les premières touches sont confondues et les deuxièmes touches sont distinctes.

Lorsque l'appel est à établir en mode de communication DECT, le numéro téléphonique relatif à l'appel subit une conversion après l'appui sur une touche de prise de ligne, lorsque le numéro est international.

Selon une autre caractéristique de l'invention, des moyens d'émission inclus dans le terminal et propres à l'un des premier et deuxième modes de communication sont coupés lorsque le terminal établit l'appel sortant dans l'autre mode de communication. Cette caractéristique contribue à éviter toute perturbation parasite entre modes de communication et accessoirement diminue la consommation électrique du terminal.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 montre schématiquement un terminal bimode selon l'invention, avec sa face graphique et de saisie/désignation pour usager, lorsqu'il est sous la couverture à la fois d'un réseau de type GSM et d'un réseau de type DECT ;
- la figure 2 est un algorithme de sélection du mode de communication pour un appel sortant depuis le terminal bimode ; et
- la figure 3 est un algorithme du type de communication lorsque le mode DECT est sélectionné.

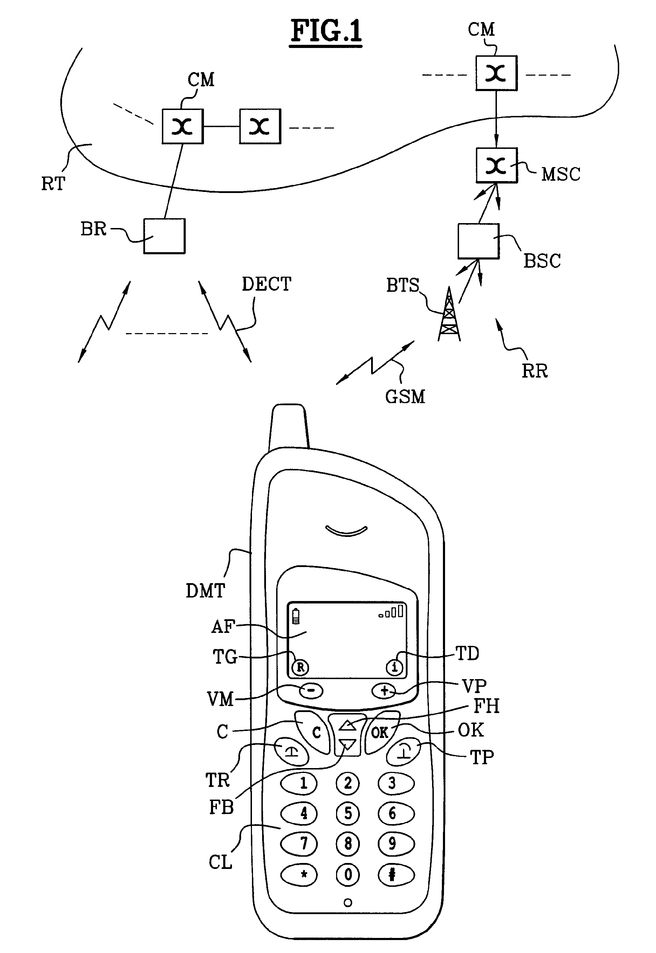

Un terminal radiotéléphonique mobile bimode DMT (Dual Mode Terminal) est capable de communiquer en un premier mode de communication dit GSM (Global System for Mobile communication) ou dans un deuxième mode de communication dit DECT (Digital Enhanced Cordless Telecommunications). Dans la description ci-après, le premier mode GSM désigne de manière indifférente une communication avec un réseau de radiotéléphonie de type GSM 900 ou de type DCS 1800 (Digital Cellular System) dont le sous-réseau fixe est schématisé dans la figure 1 par une station de base BTS, un contrôleur de station de base BSC et un commutateur de service mobile MSC raccordé à un commutateur CM d'un réseau de téléphonie RT, par exemple le réseau radiotéléphonique public. Lorsque le terminal DMT communique en mode DECT, il échange des signaux à travers une borne radio BR qui est reliée à un réseau téléphonique fixe RT tel que le réseau téléphonique public ou un réseau numérique à intégration de services RNIS à travers une ligne téléphonique d'abonné et éventuellement à travers un commutateur privé PABX. La borne BR dessert notamment d'autres terminaux téléphoniques portables fonctionnant au moins en mode DECT.

La figure 1 montre en détail la face avant du terminal DNT mise à la disposition d'un usager. Cette face présente un clavier de numérotation classique à douze touches CL, plusieurs touches supplémentaires précisées ci-après, et un écran d'afficheur AF selon une réalisation connue d'un terminal radiotéléphonique mobile GSM. Les touches supplémentaires sont une touche de raccroché TR, par exemple rouge ; une touche de prise de ligne TP, par exemple verte ; une touche centrale "de navigation" comportant à gauche et à droite une touche d'effacement C (Clear), une touche de validation OK et des touches d'ascenseur avec flèche vers le haut FH et flèche vers le bas FB ; et deux touches de réglage du volume sonore d'un haut-parleur telles qu'une touche de diminution de volume VM et une touche d'augmentation de volume VP disposées dessous l'écran de l'afficheur AF et respectivement sensiblement au-dessus des touches TR et TP.

Le clavier CL et les touches supplémentaires sont utilisés de la même manière pour une communication en mode GSM comme dans un terminal GSM classique, et pour une communication en mode DECT comme dans un terminal classique DECT. Par exemple, pour un appel sortant, les touches du clavier CL servent à composer le numéro d'appel supposé à au plus N=1 chiffre pour un demandé ayant un terminal desservi par la borne BR et supposé comprendre au moins N+1 chiffres pour un demandé équipé d'un terminal téléphonique fixe ou d'un terminal radiotéléphonique mobile ayant généralement au moins dix chiffres, y compris pour une communication internationale. Toutefois, quel que soit le mode de communication, l'usager compose le numéro téléphonique du demandé avant d'appuyer sur la touche de prise de ligne TP, conformément à l'établissement d'un appel sortant en mode GSM, et à l'inverse d'un appel sortant en mode DECT. Ainsi, indépendamment du mode de communication sélectionné, la touche TP déclenche l'établissement d'une communication radio avec la station de base BTS auquel est rattaché le terminal DMT momentanément lorsque celui-ci fonctionne en mode GSM, ou une communication radio avec la borne BR dans la couverture de laquelle le terminal DMT se trouve momentanément.

Deux touches supplémentaires TG et TD qui sont programmables selon l'invention et qui sont mises à la disposition d'un usager d'un terminal DECT apparaissent en bas de l'écran de l'afficheur AF en réponse à une sollicitation de la touche flèche vers le haut FH lorsqu'une communication en mode DECT est établie par le terminal DMT.

La première touche programmable TG visualisée par un logotype en bas de l'afficheur AF au-dessus de la touche VM indique la touche "rappel enregistreur" qui permet d'accéder à des services offerts par l'opérateur du réseau RT ou à un commutateur PABX auquel est raccordée la borne radio BR. La succession des appuis sur la touche flèche vers le haut FH et la touche de diminution du volume VM lorsqu'un appel DECT est établi, est équivalente à un appui sur la touche "rappel enregistreur" selon la norme DECT. Par exemple, un premier appui de la touche VM permet à l'usager de signaler à un deuxième interlocuteur qu'il est déjà en communication, et un deuxième appui de la touche VM le relie de nouveau au premier interlocuteur.

La deuxième touche programmable de droite TD sert, en appuyant sur la touche VP, à mettre en écoute amplifiée la borne radio BR (base DECT). Toutefois, selon une variante préférée, la touche programmable TD par sollicitation de la touche VP sert de touche d'intercommunication par exemple pour transférer une communication vers un terminal de type DECT déclaré auprès de la borne BR. Ainsi, la succession des appuis sur la touche flèche vers le haut FH et la touche d'augmentation de volume VP lorsqu'un appel DECT est établi, est équivalente à un appui sur la touche "d'intercommunication" selon la norme DECT.

Si l'usager continue à naviguer dans les menus, les deux touches programmables TG et TD disparaissent de l'afficheur AF lorsque l'utilisateur appuie sur une autre touche, par exemple pour consulter un menu avec les touches FH et FB.

La touche de prise de ligne TP qui sert également de touche Bis pour rappel du dernier numéro téléphonique et de touche d'écoute amplifiée est également sollicitée pour mettre en marche le terminal, c'est-à-dire pour mettre sous tension de la batterie incluse de manière amovible dans le terminal DMT, les circuits électroniques du terminal. De même, la touche de raccroché TR sert également de touche d'arrêt pour mettre hors tension les circuits électroniques dans le terminal lorsque celui-ci n'est plus en communication.

Au repos, lorsque le terminal DNT n'est pas en communication, la touche programmable de gauche TG est redéfinie comme une touche de sélection de mode de communication. La touche TG est sollicitée pour valider une flèche désignant le mode GSM ou le mode DECT à sélectionner, comme indiqué dans le tableau suivant :

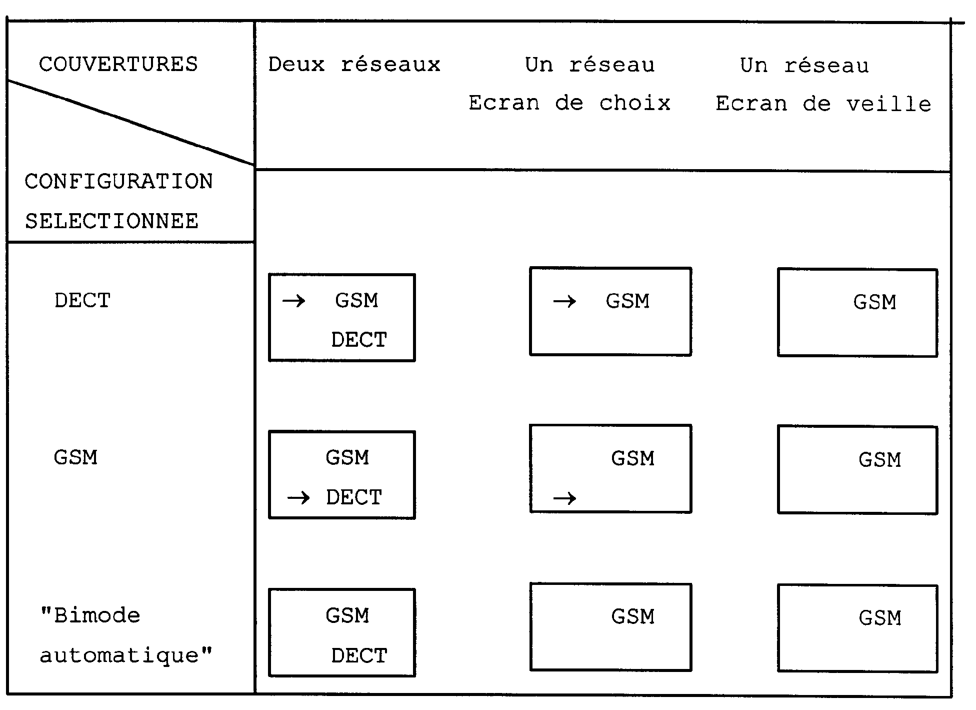

La première colonne de ce tableau contient les trois configurations possibles du terminal DMT qui sont une configuration en mode DECT seulement, une configuration en mode GSM seulement, et une configuration bimode automatique. L'une de ces trois configurations est sélectionnée préalablement à toute communication dans un menu "REGLAGES/RESEAU" au moyen des touches FH, FB et OK. Si la configuration en mode DECT est sélectionnée, le terminal DMT fonctionne seulement en mode DECT et l'interface radio avec le réseau de radiotéléphonie RR incluse dans le terminal est coupée et le terminal se comporte comme un terminal mobile de type DECT ; dans ce mode DECT, le terminal reçoit les appels entrants externes ou d'intercommunication en mode DECT et établit des appels sortants en mode DECT. Inversement, lorsque la configuration en mode GSM est sélectionnée, l'interface radio DECT avec la borne radio BR incluse dans le terminal est coupée et le terminal DMT se comporte comme un terminal mobile de type GSM ; dans ce mode GSM, le terminal reçoit des appels entrants de trafic GSM ou de message court SMS et établit des appels sortants en mode GSM. En configuration bimode, le terminal DMT peut commuter automatiquement entre les modes GSM et DECT, comme on le verra dans la suite, en raison d'une perte de couverture ou de service relative à l'un des deux modes de communication ; dans cette configuration bimode, le terminal DMT maintient sa localisation par rapport à la station de base BTS et la borne radio BR dans la mesure où il est sous la couverture de ceux-ci.

Le terme "coupée" attribué ci-dessus à une interface radio signifie que le moyen d'émission inclus dans cette interface n'émet pas, c'est-à-dire est hors tension, pour ne pas perturber le fonctionnement du moyen de réception dans l'interface radio associée à l'autre mode de communication ; par exemple, lorsque le mode GSM est sélectionné pour établir une communication avec un réseau de radiotéléphonie DCS 1800, le moyen d'émission de l'interface radio DECT dont la bande de fréquence d'émission est très proche de celle de la bande de fréquence du réseau DCS 1800 est coupé au moins pendant les communications en mode GSM. En variante, afin de diminuer la consommation électrique du terminal, l'interface radio correspondant au mode non sélectionné DECT ou GSM est entièrement coupée pendant une communication selon l'autre mode.

Dans le tableau précédent, chaque case contient l'état de l'afficheur AF lorsque l'un ou les deux modes de communication GSM et DECT sont possibles. En pratique, le mode GSM est désigné par un identifiant ou nom de l'opérateur du réseau RR et le mode DECT est désigné par un identifiant ou nom de la borne radio BR qu'a attribué l'usager du terminal lorsque celui-ci s'est déclaré auprès de la borne BR selon une procédure connue pour le mode DECT. Ces identifiants sont affichés au début d'un menu principal notamment après mise sous tension du terminal et composition d'un code confidentiel, ou après réveil du terminal, ou après retour au menu principal. La flèche est située en face du mode de communication qui n'est pas sélectionné et qui est à sélectionner en sollicitant la touche programmable de gauche TG par la touche VM. En variante, la flèche est remplacée par un affichage vidéo inverse, c'est-à-dire par un rectangle ombré contenant le nom du mode. Dans la première colonne de case d'affichage du tableau précédent, les deux réseaux de types GSM et DECT desservis par la station de base BTS et la borne BR présentent des couvertures radioélectriques incluant le terminal DMT, tandis que dans les deux autres colonnes, le terminal DMT n'est couvert que par le réseau RR de type GSM. Ainsi, afin d'éviter des perturbations mutuelles entre les interfaces radio GSM et DECT dans le terminal DMT, une communication en mode GSM et une communication en mode DECT simultanées sont interdites. Si l'un des deux réseaux est absent, le terminal conserve en mémoire le réseau sélectionné mais ne place pas la flèche puisqu'il n'y a qu'un seul réseau présent à l'écran, comme indiqué dans la dernière colonne du tableau précédent.

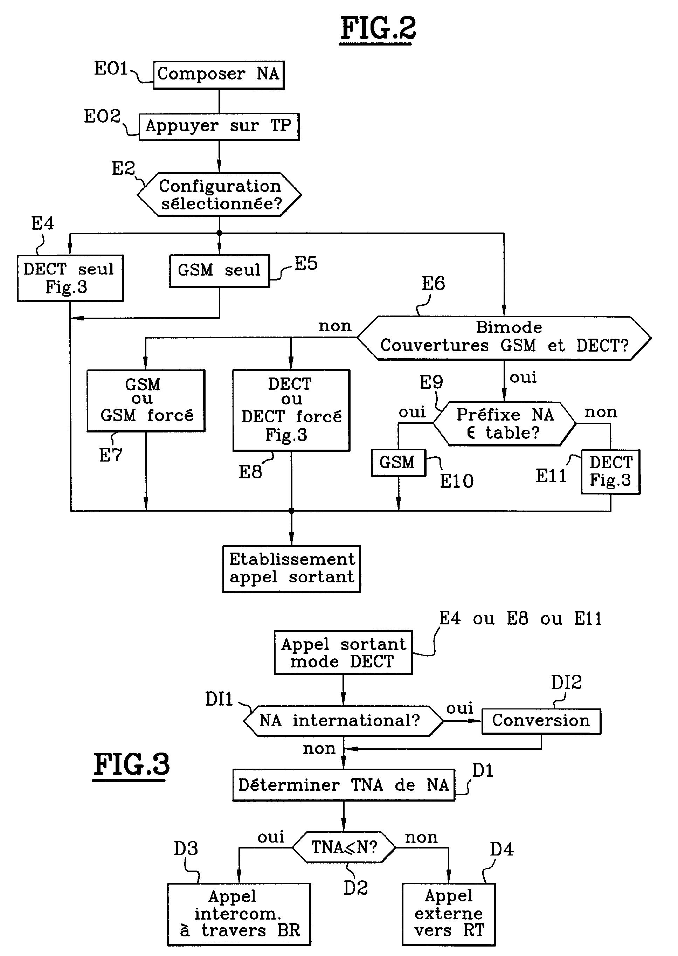

A titre d'exemple, l'usager procède de la manière suivante s'il souhaite sélectionner l'un ou l'autre des premier et deuxième modes de communication GSM et DECT au moyen de la sollicitation de la touche programmable de gauche VM, dans la mesure où il a décidé par un menu spécifique que cette touche VM soit une touche de sélection de réseau. Si l'afficheur AF présente la case suivante : 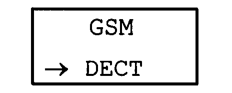 indiquant que les deux modes de communication DECT et GSM sont possibles, c'est-à-dire que le terminal DMT est couvert par la station de base BTS et la borne radio BR, et que le mode DECT est sélectionné, l'écran de l'afficheur AF passe à l'état suivant lorsque le terminal DMT s'est éloigné hors de la couverture de la borne BR pour le mode DECT : 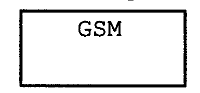 Puis dès que le terminal DMT entre de nouveau sous la couverture radioélectrique de la borne BR, l'afficheur AF passe à l'état suivant : 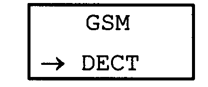 Cependant, si le terminal est déplacé hors de la couverture radioélectrique du réseau de radiotéléphonie RR, l'afficheur AF indique que le terminal est seulement sous la couverture de la borne BR par l'état suivant : 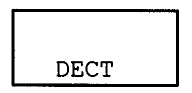 Si l'usager ne sélectionne aucun des deux modes de communication, c'est-à-dire lorsque le terminal DMT est en bimode véritablement automatique comme on le verra dans la suite en référence à l'étape E6 de la figure 2, et si le terminal est de nouveau sous les couvertures radioélectriques d'une station de base du réseau RR et d'une borne radio de type DECT, l'afficheur AF ne précise pas le mode de communication sélectionné automatiquement, comme indiqué par l'état suivant

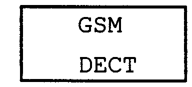

L'unité de gestion de type microcontrôleur gérant les communications en mode GSM et les communications en mode DECT incluses dans le terminal DMT exécutent l'algorithme d'appel sortant montré à la figure 2.

Initialement, à des étapes E01 et E02, l'usager compose le numéro téléphonique d'appel NA du demandé et appuie sur la touche de prise de ligne TP pour déclencher l'établissement d'une communication de départ dans l'un des modes préalablement sélectionné. La "composition" du numéro du demandé est effectuée manuellement sur le clavier CL ou au moyen de la sollicitation d'une touche abrégé du numéro du demandé, ou encore en sélectionnant dans un menu présenté sur l'afficheur AF le nom du demandé dans un répertoire.

A l'étape suivante E2, l'unité de gestion du terminal DMT lit en mémoire la configuration du terminal DMT préalablement sélectionnée par l'usager dans le menu "REGLAGE/RESEAU".

Si la configuration DECT a été sélectionnée, l'appel sortant demandé est établi en mode DECT à travers la borne radio BR pour communiquer avec un terminal fixe ou mobile à travers le réseau RT ou localement avec un terminal en mode DECT dans la couverture de la borne BR.

Si la configuration en mode GSM seul a été sélectionnée, l'unité de gestion établit une communication en mode GSM avec un terminal fixe ou mobile à travers le réseau RR.

Si la configuration sélectionnée est le bimode automatique, l'étape suivante E6 vérifie si le terminal DMT est dans des zones de couverture de la station de base BTS et de la borne radio BR. Si le terminal DMT est situé hors de la couverture de la station de base BTS ou de la borne BR, l'unité de gestion oriente l'établissement de l'appel sortant vers le mode GSM à l'étape E7 lorsque le terminal DMT n'est pas couvert par une borne radio telle que la borne BR, mais est seulement couvert par une station de base, telle que la station BTS ; inversement, à l'étape E8, l'unité de gestion oriente l'établissement de l'appel sortant vers le mode DECT lorsque le terminal DMT n'est pas couvert par une station de base, telle que la station BTS, et est seulement couvert par une borne radio auprès de laquelle il s'est déclaré, telle que la borne BR.

Les étapes E7 et E8 sont également effectuées lorsque l'usager décide de forcer la sélection du mode de communication respectivement en mode GSM et en mode DECT. Ce forçage est obtenu au moyen de la touche programmable TG apparaissant en bas et à droite sur l'écran de l'afficheur AF, et en appuyant sur la touche VM. Par exemple lorsque l'afficheur AF affiche la première case en haut et à gauche du tableau précité, c'est-à-dire lorsque le terminal DMT a sélectionné automatiquement le mode DECT pour l'appel sortant, l'usager peut faire basculer la sélection de mode en appuyant sur la touche VM dessous la touche programmable TG afin que l'appel sortant soit établi en mode GSM. L'étape E8 correspond à l'inverse de ce qui précède, en forçant l'établissement de l'appel sortant en mode DECT, alors que le terminal avait sélectionné automatiquement le mode GSM.

Lorsqu'à l'étape E6, l'unité de gestion du terminal DMT constate que le terminal est situé dans des zones de couverture GSM et DECT, elle procède à une sélection du mode de communication en fonction du préfixe du numéro téléphonique composé NA. De préférence, préalablement à tout établissement de communication, l'usager a enregistré dans une table quelques préfixes nationaux afin que tout numéro d'appel téléphonique composé contenant l'un de ces préfixes provoque l'établissement d'une communication en l'un des deux modes GSM et DECT, par exemple le mode GSM selon la figure 2. Un préfixe est généralement composé des quatre premiers chiffres ou caractères d'un numéro d'appel ; par exemple pour un numéro national au format 0I AB PQ MCDU, le préfixe comprend deux, trois ou quatre premiers caractères 0I AB. Ainsi, lorsque le terminal est dans des zones de couverture de la station BTS et de la borne radio BR à l'étape E6, l'étape E9 compare le préfixe du numéro téléphonique composé NA avec les préfixes contenus dans la table. Si le préfixe du numéro NA est identique à l'un des préfixes de la table, l'appel sortant est établi en mode GSM à l'étape E10. Dans le cas contraire, l'appel sortant est établi en mode DECT à l'étape E11.

Toujours en référence à la figure 2, selon une variante de réalisation plus simple, le procédé de l'invention ne comprend pas les étapes E4 à E8, l'étape E2 étant alors confondue avec l'étape E9.

Avant l'établissement de l'appel sortant en mode DECT à chacune des étapes E4, E8 et E11, l'unité de gestion adapte de préférence les numéros d'appel téléphonique au format international selon que le demandé est national ou international, comme indiqué à des étapes initiales DI1 et DI2 à la figure 3. Par exemple, lorsque le numéro composé est +33 1 30 73 70 45, c'est-à-dire contenant le préfixe international de la France où se trouve l'usager du terminal DMT, l'étape DI2 remplace le préfixe +33 par le préfixe de l'opérateur choisi initialement par l'usager, afin que le numéro d'appel transmis par le terminal DMT soit le suivant : 71 30 73 70 45, lorsque le préfixe de l'opérateur est 7. Selon un autre exemple, lorsque le numéro d'appel composé contient un préfixe international ne correspondant pas au pays auquel est rattaché l'usager et débute par le signe +, comme par exemple le numéro +44 472 4567, l'étape DI2 le convertit en le numéro d'appel 00 44 472 4567 en changeant le préfixe +44 par le préfixe 00 44.

Puis l'unité de gestion du terminal DMT distingue une "intercommunication locale" avec un terminal demandé desservi par la borne BR et une "communication externe" à travers la borne BR et le réseau fixe RT, selon l'algorithme montré à la figure 3. A une étape D1, l'unité de gestion du terminal DMT détermine la taille TNA du numéro d'appel téléphonique composé NA. A l'étape suivante D2, la taille TNA du numéro NA est comparée au nombre N, typiquement égal à 1. Si la taille TNA est au plus égal à N, le numéro d'appel correspond à celui d'un terminal local desservi radioélectriquement par la borne BR, et le terminal DMT établit un appel sortant en mode intercommunication afin que la borne BR le mette en communication avec le demandé local, à l'étape D3. Par contre, si la taille TNA du numéro d'appel NA est supérieure à N, l'appel sortant est établi en mode externe DECT à travers le réseau fixe RT à une étape D4.

## Revendications

1. Procédé pour établir un appel sortant dans un terminal radiotéléphonique (DMT) susceptible de fonctionner selon l'un de premier et deuxième modes de communication (GSM, DECT), caractérisé en ce que, lorsque le terminal est configuré en bimode, l'appel sortant en le premier mode (GSM) est établi en réponse à l'appartenance (E10) d'un préfixe du numéro téléphonique (NA) relatif à l'appel sortant à une table de préfixes mémorisée dans le terminal, après un appui sur une première touche de prise de ligne (TP) du terminal.

2. Procédé conforme à la revendication 1, selon lequel lorsque le terminal est configuré en bimode, l'appel sortant en le premier mode (GSM) est établi en réponse à l'un des événements suivants après un appui sur la première touche de prise de ligne (TP) du terminal : perte de couverture radioélectrique (E7) relative à l'autre mode, sélection manuelle (E7) dudit premier mode, appartenance (E10) du préfixe du numéro téléphonique (NA) relatif à l'appel sortant à la table de préfixes mémorisée dans le terminal.

3. Procédé conforme à la revendication 2, selon lequel lorsque le terminal (DMT) est configuré en bimode, l'appel sortant est établi en le deuxième mode (DECT) en réponse à l'un des événements suivants après l'appui sur une deuxième touche de prise de ligne (TP) du terminal : perte de couverture radioélectrique relative au premier mode (E8), sélection manuelle (E8) dudit deuxième mode, différence (E11) entre le préfixe du numéro téléphonique relatif à l'appel sortant et les préfixes contenus dans ladite table.

4. Procédé conforme aux revendications 2 et 3, selon lequel les première et deuxième touches de prise de ligne sont confondues en une unique touche de prise de ligne (TP).

5. Procédé conforme à l'une quelconque des revendications 2 à 4, selon lequel la sélection (E7, E8) de mode est effectuée par forçage en appuyant sur une touche prédéterminée (VM) pour valider la sélection du mode écrit sur un afficheur (AF) du terminal de préférence en regard d'une marque prédéterminée.

6. Procédé conforme à l'une quelconque des revendications 1 à 5, selon lequel les premier et deuxième modes sont les modes de communication GSM et DECT respectivement.

7. Procédé conforme à la revendication 6, comprenant, lorsque l'appel sortant est établi en mode de communication DECT, la détermination (D1) de la taille (TNA) du numéro téléphonique (NA), la comparaison (D2) de la taille déterminée avec un nombre prédéterminé (N), et l'établissement de l'appel sortant en un mode d'intercommunication (D3) à travers une borne radio (BR) lorsque la taille (TNA) est au plus égale au nombre prédéterminé, ou l'établissement de l'appel sortant en un mode externe (D4) vers un réseau téléphonique fixe (RT) dans le cas contraire.

8. Procédé conforme à la revendication 6 ou 7, selon lequel lorsque l'appel est établi en mode de communication DECT, la succession des appuis sur des première et deuxième touches prédéterminées (FH, VM) du terminal est équivalente à un appui sur une touche "rappel enregistreur".

9. Procédé conforme à l'une quelconque des revendications 6 à 8, selon lequel lorsque l'appel est établi en mode de communication DECT, la succession des appuis sur des première et deuxième touches prédéterminées (FH, VP) du terminal est équivalente à un appui sur une touche d'intercommunication.

10. Procédé conforme à l'une quelconque des revendications 6 à 9, selon lequel lorsque l'appel est à établir en mode de communication DECT, le numéro téléphonique (NA) relatif à l'appel subit une conversion (DI2), lorsque le numéro (NA) est international.

11. Procédé conforme à l'une quelconque des revendications 1 à 10, selon lequel des moyens d'émission inclus dans le terminal et propres à l'un des premier et deuxième modes de communication sont coupés lorsque le terminal établit l'appel sortant dans l'autre mode de communication.
